# EUROPEAN PATENT APPLICATION

(11) **EP 1 482 417 A1**
(43) Date of publication of application: **01.12.2004**
(21) Application number: 03012031.5
(22) Date of filing: 28.05.2003
(51) Int. Cl.: G06F 17/30

(54) **Data processing method and system for combining database tables**

(71) Applicant: SAP Aktiengesellschaft, 69190 Walldorf (DE)
(72) Inventor: Schmitt, Winfried, 69190 Walldorf (DE); Hofmann, Helmut, 69207 Sandhausen (DE); Balzar, Andreas, 69115 Heidelberg (DE)
(74) Representative: Richardt, Markus, Dipl.-Ing.

(57) **Abstract**

The present invention relates to a data processing comprising the steps of :
- providing a set of database tables in a data warehouse,
- providing a user interface for entering a combination of at least first and second database tables of the set of database tables,
- storing of the combination in a combination database table,
- providing of an application program for processing of the database tables and the combination database table.

## Description

### Field of the invention

The present invention relates to the field of data processing systems and more particularly without limitation to relational databases and data warehouses.

### Background and prior art

Databases are computerized information storage and retrieval systems. A Relational Database Management System (RDBMS) is a database management system (DBMS) which uses relational techniques for storing and retrieving data. Relational databases are organized into tables. A database will typically have many tables which are stored on random access storage devices (RASD) such as magnetic or optical disk drives for semi-permanent storage.

In recent years DBMSs have become increasingly popular for several factors, including the decrease in the cost of storage devices and the increased need to store and track electronic information. As DBMSs become increasingly popular, more and more data is stored in databases, and handling, storing, analyzing, archiving, moving, and collating the data becomes more of a concern to those utilizing such data.

To manage this increasing data load various software aids, sometimes referred to as utilities, have been developed. One thing that utilities have in common is that utilities assist users in managing data. They may be simple, such as a back up utility, which merely copies several files. They may be more complex, such as a structured query language interface, which has evolved into a standardized mechanism for manipulating data. They also may be complex and sophisticated on line analytical processing programs (OLAP) which are designed to do complex analytical processing.

Different types of data, relational and object, are being stored in data warehouses. The term "data warehouse" is used to describe large amounts of related data that are stored together. With the increased data that is stored, there has been an increasing complexity in using, retrieving, sorting and organizing data.

SAP's Business Information Warehouse is a data warehouse which enables a user to analyse data from operative SAP applications as well as other business applications and external data sources such as databases, online services and the Internet.

The administrator workbench functions of business information warehouse are designed for controlling, monitoring and maintaining all data retrieval processes.

The business explorer of the business information warehouse is a reporting and analysis tool for analysis and decision-making support. The business explorer includes tools for query reporting and online analytical processing (OLAP) functions.

### Summary of the invention

The present invention provides a data processing method which enables a user to enter a combination of at least first and second database tables of a set of database tables stored in a data warehouse. The combination of the first and second database tables is stored in a combination table for access of an application program. The application program is adapted to process the database tables of the data warehouse and the combination database table. This has the advantage that a user can conveniently enter information regarding combination of entries in the database tables of the data warehouse.

In accordance with a preferred embodiment of the invention a user can select the database tables from the set of database tables stored in the data warehouse. This selection can be restricted by the allowable combinations of data types which can be entered into application program as input data. Pairs of entries of the database tables which the user has combined are stored in the combination database table.

In accordance with a further preferred embodiment of the invention a matrix is displayed for determining the entries to be combined. The matrix has a column direction for displaying the entries of one of the selected database tables and a row direction for displaying of the entries of the other one of the selected database tables. For each matrix element a check-box is displayed. By clicking on a check-box the user can combine the corresponding column and row entries.

In accordance with a further preferred embodiment of the invention the entries of the selected database tables are displayed in separate lists which are distanced by a connector field. A combination of list entries is entered by connecting the entries to be combined by a graphical connector symbol.

In accordance with a further preferred embodiment of the invention the connectors which have been entered for a given entry in one of the lists are visualised in response to a user's selection of the entry.

In accordance with a further preferred embodiment of the invention a user can enter rules for the combination of entries in different database tables. For example these rules can reflect a business structure of the enterprise as far as the assignment of companies and legal entities of the company to profit centres or business units is concerned.

In accordance with a further preferred embodiment of the invention the user selects a number n of database tables from the data warehouse to be combined. In order to enter the combination the user specifies m-tuples of entries, where each one of the m-tuples contains one entry from each one of the selected database tables. The m-tuples which are created this way are stored in the combination database table.

### Brief description of the drawings

In the following preferred embodiments of the invention will be explained in greater detail by making reference to the drawings, in which:
- Figure 1: ls a block diagram of a preferred embodiment of a data processing system of the invention,
- Figure 2: shows an example of a user defined combination database table,
- Figure 3: Is illustrative of a preferred embodiment of a data processing method of the invention,
- Figure 4: Shows a first embodiment of a user interface for entering combinations of data table entries,
- Figure 5: Is a second embodiment for a user interface for entering of combinations.

### Detailed description

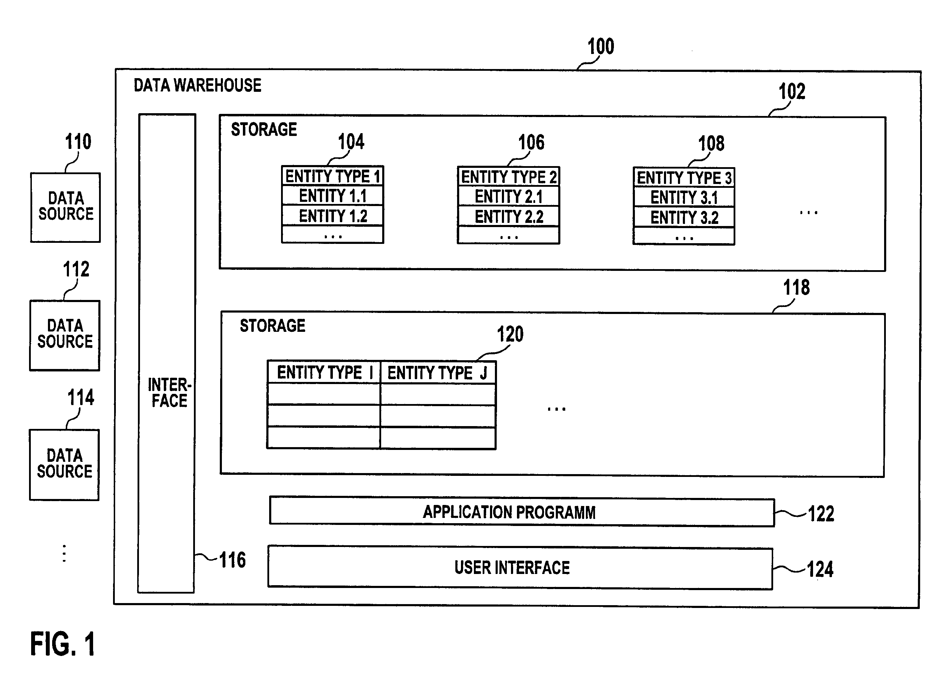

Figure 1 shows data warehouse computer system 100. Data warehouse computer system 100 has storage 102 for storing of a number of database tables 104, 106, 108, .

Data from internal or external data sources 110, 112, 114, ... is extracted, transformed and loaded into data warehouse computer system 100 via interface 116. The imported data is stored in the database tables 104, 106, 108, ..., where each database table stores data of the same entity type. A data item of a certain entity type which is stored in one of the database tables 104, 106, 108, is referred to as 'entity' in the following.

In the example considered here database table 104 stores entities of entity type 1. For example entity type 1 is 'account numbers of customers'. In this instance entity 1.1 is the account number of customer A, entity 1.1. is the account number of customer B, etc.

Database table 106 stores data entities which have entity type 2. For example entity type 2 is 'account numbers of vendors'. In this instance entity 2.1 is the account number of vendor A, entity 2.2 is the account number of vendor B.

For instance, database table 108 has entity type 3 'legal entity' and stores the legal entities of a company. In this instance entity 3.1 is 'xy GmbH', entity 3.2 is 'xy Ltd', etc.

Further Data Warehouse Computer System 100 has storage 118 for storage of combination database tables 120, ... Combination database table 120 has a left column for storing of entities of entity type i and a right column for storing of entities of entity type j.

Data Warehouse Computer System 100 has application program 122 for performing a certain type of business orientated data processing, such as for the purposes of accounting, book keeping and / or consolidation. The application program 122 is designed to process certain classes of database tables and combination database tables. For example, application programme 122 is designed to process database tables containing account numbers and organisational entities and combination database tables combining legal entities and profit centres.

By means of user interface 124 a user can select first and second database tables of storage 102 as a basis to create combination database table 120. For example the user can select database table 106 having entity type i = 2 and database table 108 having entity type j = 3. Now the user can enter combinations of the entities stored in the database tables 106 and 108. In order to create pairs of entities having entity types i = 2 and j = 3 the user selects one of the entities of entity type 2 of database table 106 and assigns this entity to one of the entities of entity type j = 3 of database table 108. This pair of entities is entered in combination database table 120 whereby the entity having entity type i = 2 is entered in the left column and the other entity having the entity type j = 3 is entered in the same row in the right column. This procedure is performed for all entities of the database tables 106 and 108 which need to be combined.

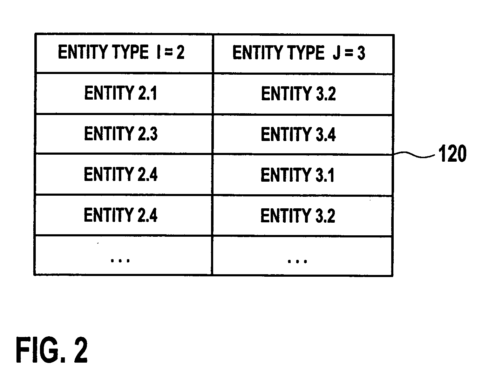

Figure 2 shows an example for the user entries into combination database table 120.

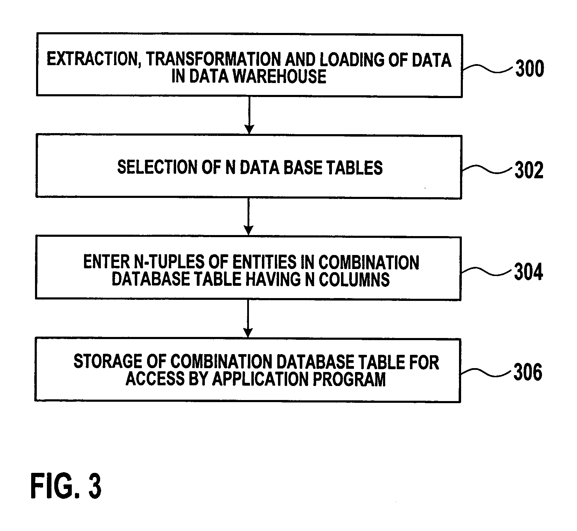

Figure 3 shows a corresponding flow chart. In step 300 data for entity types is extracted, transformed and loaded from internal or external data sources. In step 302 a user selects a number of n database tables of the data warehouse computer system. In step 304 the user specifies a number of n-tuples of entities for storage in the combination database table. In step 306 the resulting combination database table is stored for access by the application programme.

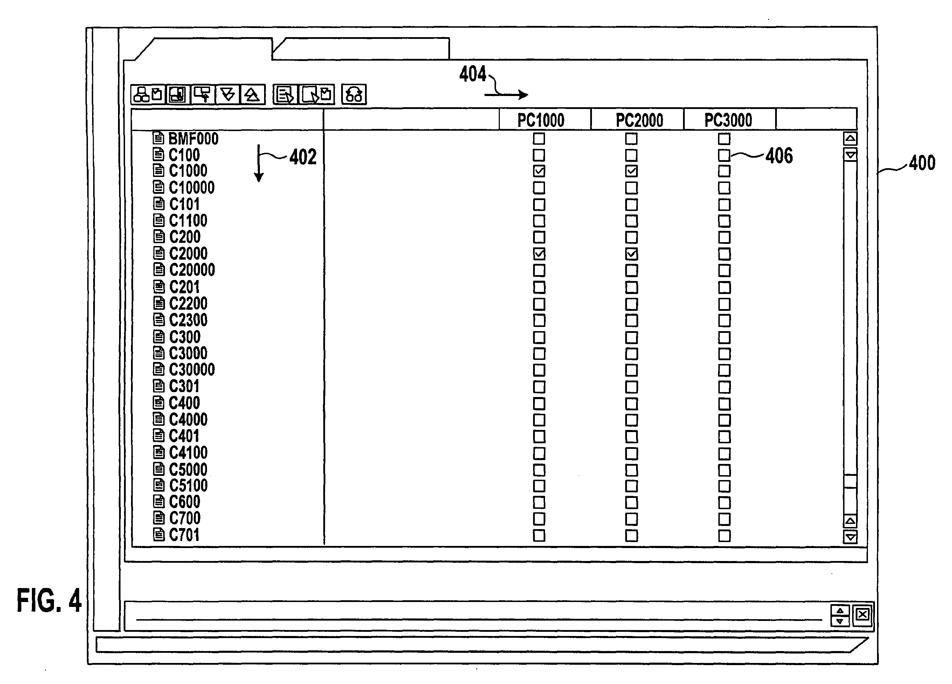

Figure 4 illustrates an embodiment of user interface 124 (cf.1). By means of user interface 124 a dialogue box 400 is created. Previously the user has selected a database table storing legal entities and a database table storing profit centres. The legal entities are displayed in column direction 402 of dialogue box 400 i.e. legal entities BMF00, C100, C1000, C10000, C101...

The profit centres of the other one of the user selected database tables are displayed in row direction 404 within dialogue box 400. This way a matrix is defined, where each matrix element has a coordinate within dialogue box 400 that is determined by a pair of legal entities and profit centres. On each matrix element a check-box 406 is displayed.

In the example considered here the user has checked the check-boxes at matrix elements C1000, PC1000; C1000, PC2000; C2000, PC1000; C2000 and PC2000. This way the user has specified corresponding combinations of entities of the database tables which are stored in the combination database table.

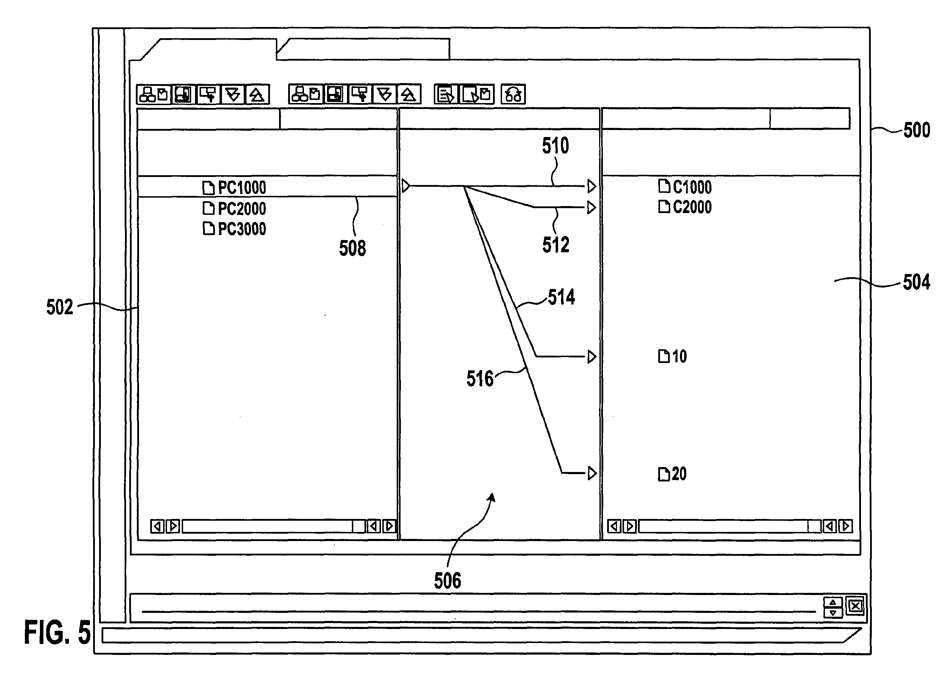

Figure 5 shows an alternative embodiment of user interface 124 (cf.1). Dialogue box 500 shows list 502 of entities of one of the selected database tables, i.e. the database table storing the profit centres. Further dialogue box 500 has list 504 showing the entities of the other one of the selected database tables, i.e. the legal entities of the company.

The lists 502 and 504 are separated by connector field 506. In connector field 506 a user can enter connectors from an entity of list 502 to entities of list 504 and from entities of list 504 to entities of list 502. When a user moves selection bar 508 onto one of the entities of list 502 or list 504 the connectors originating from the selected entity are shown in connector filed 506.

For example the user has moved the selection bar 508 onto profit centre entity 'PC1000' in list 502 in the example shown in the figure 5. In response connectors 510, 512 and 514 are shown in connector field 506.

In addition the user can enter an additional combination between PC1000 and legal entity 20 by entering connector 516. This can be done by drawing a corresponding connection by means of a computer mouse. The user can then move selection bar 508 to another entity of list 502 or 504 for visualisation of previously entered combinations and / or for entering or editing of combinations. These combinations are stored in the corresponding combination database table (cf. combination database table 120 of Figure 1).

It is important to note that more than two lists can be shown in dialogue box 500 on both sides of connector field. Selection bar 508 can be used to select any one of the entities of the lists for display of the connectors originating for the selected entity.

### List of Reference Numerals

- 100: data warehouse computer system
- 102: storage
- 104: database table
- 106: database table
- 108: database table
- 110: data source
- 112: data source
- 114: data source
- 116: interface
- 118: storage
- 120: combination database table
- 122: application program
- 124: user interface
- 400: dialog box
- 402: column direction
- 404: row direction
- 406: check box
- 500: dialog box
- 502: list
- 504: list
- 506: connector field
- 508: selection bar
- 510: connector
- 512: connector
- 514: connector
- 516: connector

## Claims

1. A data processing method comprising the steps of :
- providing a set of database tables,
- providing a user interface for entering a combination of at least first and second database tables of the set of database tables,
- storing of the combination in a combination database table,
- providing of an application program for processing of the database tables and the combination database table.

2. The method of claim 1, further comprising the steps of:
- selection of the first and the second database tables from the set of database tables,
- combining entries of the first database table and the second database table to create pairs of entries,
- storing of the pairs in the combination database table.

3. The method of claim 1 or 2, further comprising the steps of :
- displaying a matrix having a column direction for displaying of entries of the first database table and having a row direction for displaying of entries of the second database table,
- displaying of check-boxes in the matrix elements for entering of combinations of entries of the first and second database tables.

4. The method of claim 1, 2, or 3, further comprising the steps of :
- selection of a number n of database tables from the set of database tables,
- combining entries of the selected database tables to create n-tuples, each one of the n-tuples containing one entry from each one of the selected database tables,
- storing of the n-tuples in the combination database table.

5. The method of claim 4, further comprising the steps of:
- displaying a first list of entries of the first database table,
- displaying a second list of entries of the the second database table,
- entering of a graphical connector between one of the entries of the first list and one of the entries of the second list to determine a combination of the entries.

6. The method of Claim 5, further comprising:
- selecting an entry of the first or the second lists,
- displaying of the connectors being connected to the selected entry.

7. The method of any one of the preceeding Claims 1 to 6 further comprising entering of rules for the combination of entries of the at least first and second database tables.

8. A computer program product, in particular digital storage medium, comprising program means for performing the steps of:
- providing a user interface for entering a combination of at least first and second database tables of a set of database tables,
- storing of the combination in a combination database table for access of an application program.

9. The computer program product of claim 8, the user interface enabling entering a selection of the first and the second database tables and combining entries of the first database table and the second database table to create pairs of entities, whereby the program means are adapted to store the pairs in the combination database table.

10. The computer program product of claim 8 or 9, the program means being adapted to display a matrix having a column direction for displaying of entries of the first database table and having a row direction for displaying entries of the second database table and to display check-boxes in the matrix elements for entering of combinations of entries.

11. The computer program product of claims 8, 9, or 10, the user interface being adapted for entering a selection of a number n of database tables of the set of database tables and to combine entries of the selected database tables to create m-tuples, each one of the m-tuples containing one entry from each one of the database tables, and the program means being adapted to store the m-tuples in the combination database table.

12. The computer program product of any one of the preceding Claims 8 to 11, the program means being adapted to perform the steps of:
- displaying a first list of entries of the first database table,
- displaying a second list of entries of the second database table,
- entering of a graphical connector between one of the entries of the first list and one of the entries of the second list to determine a combination of the entries.

13. The computer program product of Claim 12, the program means being adapted to enable a user to select one of the entries and to a display of the connectors being connected to the selected entry.

14. A data processing system comprising:
- a data warehouse (100) having a set of database tables (104, 106, 108,..),
- a user interface (124) for entering a combination of at least first and second database tables of the set of database tables,
- a combination database table (120,...) for storing of the combination,
- an application program (122) for processing of the database tables and the combination database table.

15. The data processing system of Claim 14, the user interface being adapted for entering a selection of the first and the second database tables and to enter a combination of entries of the first database table and the second database table to create pairs of entries.

16. The data processing system of claim 14 or 15, the means for displaying a matrix having a column direction (402) for displaying of entries of the first database table and having a row direction (404) for displaying of entries of the second database table, and further comprising means for displaying of check-boxes (406) in the matrix elements for entering of combinations of entries of the first and second database tables.

17. The data processing system of claims 14, 15 or 16, the user interface being adapted to enter a selection of a number of m database tables of the set of database tables, and to enter a combination of entries of the selected database tables to create m-tuples, each one of the m-tuples containing one entry from each of the selected database tables.

18. The data processing system of any one of the preceding claims 14 to 17, further comprising means (502, 504) for displaying the first list of entries in the first database table and for displaying a second list of entries and the second database table, whereby the user interface is adapted for entering of a graphical connector (510, 512, 514, 516) between selected entries of the first and the second lists in order to determine the combination of the entries.

19. The data processing system of any one of the preceding Claims 14 to 18, the user interface being adapted for entering of a selection (508) of one of the entries of the first or second lists, and to display of connectors (510, 512, 514, 516) being connected to the selected entry.
